# EUROPEAN PATENT SPECIFICATION

(11) **EP 1 625 769 B1**
(45) Date of publication and mention of the grant of the patent: **21.08.2019**
(21) Application number: 04766019.6
(22) Date of filing: 21.05.2004
(51) Int. Cl.: H04W 4/06, H04W 72/00

(54) **METHOD FOR ESTABLISHING A CONNECTION IN A RADIO COMMUNICATIONS SYSTEM**
VERFAHREN ZUR HERSTELLUNG EINER VERBINDUNG IN EINEM FUNKKOMMUNIKATIONSSYSTEM
PROCÉDÉ D'ÉTABLISSEMENT D'UNE CONNEXION DANS UN SYSTÈME DE RADIOCOMMUNICATION

(30) Priority: 21.05.2003 EP 03253163
(43) Date of publication of application: 15.02.2006
(73) Proprietor: Nokia Solutions and Networks GmbH & Co. KG, 81541 Munich (DE)
(72) Inventor: EDWIN, Diana, Clare, Southampton Hampshire SO15 4HU (GB); PROCTOR, Toby, Kier, SP1 2DP, Salisbury (GB); TRAYNARD, Jean-Michel, 81667 München (DE)
(74) Representative: Nokia EPO representatives
(86) International application number: PCT/EP2004/050887
(87) International publication number: WO 2004/107794

(56) References cited:
- EP-B1- 1 508 257
- US-A1- 2003 223 394
- SIEMENS: "Uplink Channels during an MBMS Session" TSG GERAN #13, XX, XX, no. g2-30203, 10 March 2003 (2003-03-10), pages 1-3, XP002289108
- "MBMS RACH access control" 3GPP TGS-RAN WORKING GROUP 2 MEETING ON MBMS; R2-030898, 15 May 2003 (2003-05-15), - 16 May 2003 (2003-05-16) pages 1-5, XP002256887 Paris, France

## Description

### Field of the invention

The invention relates to a method for establishing a connection in a radio communications system, especially in a mobile radio communications system.

### Background of the invention

In radio communications systems, signals are exchanged between radio terminals and radio stations to base stations via a so called radio interface or air interface. These radio terminals are mobile or stationary user terminals (UE - user equipments); base stations (NB - Node B) are access stations that are associated with a land based communication network. Examples of known radio communication systems are second generation digital mobile radio communication systems like GSM (Global System for Mobile Communication), based on TDMA (Time Division Multiple Access) and providing data rates up to 100 kbit/s, or third generation digital mobile radio communication systems like UMTS (Universal Mobile Telecommunication System), based on CDMA (Code Division Multiple Access) with data rates up to 2 Mbit/s.

A new feature in current radio communication systems such as GSM/GERAN (GSM Edge Radio Access Network) and UMTS/UTRAN (UMTS Terrestrial Radio Access Network) is the so called MBMS (Multimedia Broadcast/Multicast Service) service provision. Radio bearers for multicast MBMS services are set up within a cell if there are user equipments present in the cell with the particular MBMS service activated. If the number present is below a predetermined threshold value then radio bearers are established individually to each of the user equipments (point-to-point bearers) whilst if the number exceeds the threshold value a single multicast radio bearer is established to serve all user equipments that are present in the cell. Consequently, the network needs to know whether the number of user equipments present in the cell exceeds the threshold and, if less than the threshold number are present, the identities of the user equipments for the establishment of individual connections. For user equipments that are in the so called UMTS connected mode the network is able to determine the number of user equipments present in the cell with the particular MBMS service activated without communicating directly with the user equipments. For user equipments that are in an unconnected state, e.g. in a so called idle mode or URA_PCH (UTRAN Registration Area Paging Channel) state, the network will need to signal a request to the user equipments, e.g. by paging or signalling on a control channel, and the user equipments will need to respond on the common uplink signalling channel RACH (Random Access Channel). Counting of user equipment responses should be completed within a determinate time interval and a decision for the establishment or not of a single multicast radio bearer be taken based on the result of the counting procedure.

One of the main differences of MBMS to known services is that it could be offered and used when the user equipment is in idle mode, i.e. without an established radio connection to the network. The service uses a point-to-multipoint connection, either in a multicast or broadcast mode. General principles of MBMS are described in the standard documents 3GPP TR 25.992, V1.2.0 (2003-01) "Multimedia Broadcast Multicast Service (MBMS); UTRAN/GERAN Requirements", TR 23.846, V6.1.0 (2002-12) "MBMS; Architecture and functional description (Release 6)", TS 22.146, V6.1.0 (2002-09) "MBMS; Stage 1 (Release 6)", TS 45.002, V5.7.0 (2002-11) "Multiplexing and multiple access on the radio path (Release 5)"; TS 44.018, V4.12.0 (2002-12), "Radio Resource Control (RRC) protocol (Release 4"; and TS 44.060, V6.0.0 (2002-12) "General Packet Radio Service (GPRS); Mobile Station (MS) - Base Station System (BSS) interface; Radio Link Control/ Medium Access Control (RLC/MAC) protocol". US 2003/0223394 A1 is a further example of MBMS services.

Because user equipments are kept in an idle mode in order to save radio resources, the radio network is not aware about neither the number nor the position of user equipments in a given cell which are currently using the point-to-multipoint connection. If a user equipment in such a state wishes to establish a new point-to-point radio connection with the network for transmitting e.g. user data or Non-Access Stratum (NAS) data, it has to access the network on a random channel such as the RACH (Random Access Channel) or PRACH (Physical RACH). In order to access the RACH or PRACH, the user equipment may have to switch to the (P)BCCH ((Physical) Broadcast Control Channel) frequency and read continuously the (P)AGCH (Access Grant Channel) in order to receive its channel allocation. This may lead to a long interruption in the reception of the MBMS service, which may be delivered on another frequency or, in case the MBMS bearer is allocated on the same (P)BCCH frequency, be incompatible with the user equipments' capabilities.

In order to alleviate this problem it was proposed to use a specific MBMS RACH channel (MRACH), which uses the uplink channel(s) corresponding to the downlink MBMS channel(s). It was furthermore assumed that the resource allocation for the connection in progress would be made on the available (P)AGCH, bearing the same risk of MBMS service interruptions as described above.

An object of the invention is therefore to provide a method for efficiently establishing new connections in situations described above. This object is addressed by the features disclosed in the independent claims.

### Statement of the invention

The present invention proposes a new downlink MBMS Associated Control Channel (MACCH), combining the functionalities of a broadcast channel and of an associated point-to-multipoint control channel, thereby avoiding any interruption of the reception of an MBMS service for the user equipment when in progress to establish an additional connection. Nevertheless, the scope of the present invention is not limited to the above stated example.

### Brief description of the figure

The invention may be understood more readily, and various other aspects and features of the invention may become apparent from consideration of the following description and the figures as shown in the accompanying drawing sheets, wherein:
FIG 1 shows a block diagram of a radio communication network.
FIG 2 shows the format of the MBMS Neighbour Cell Channel Information.
FIG 3 shows a basic diagram of a base station (BTS) and of a User Equipment (UE).

### Detailed description of the invention

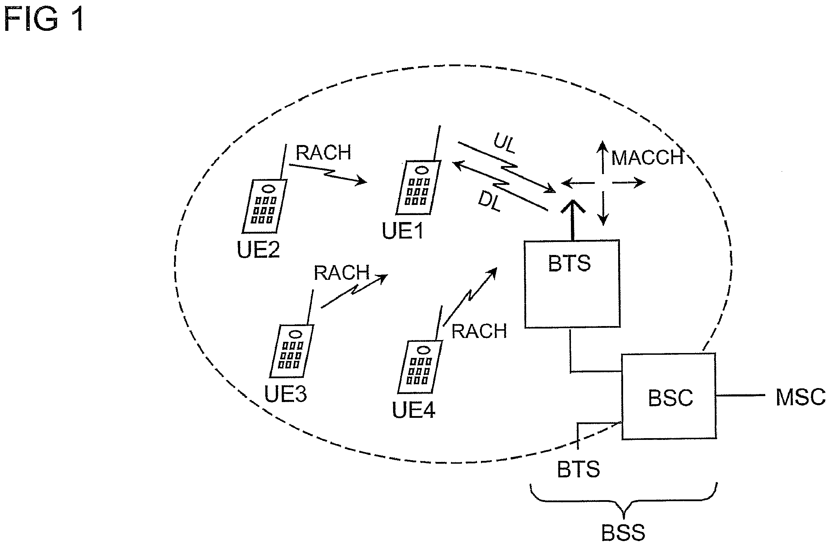

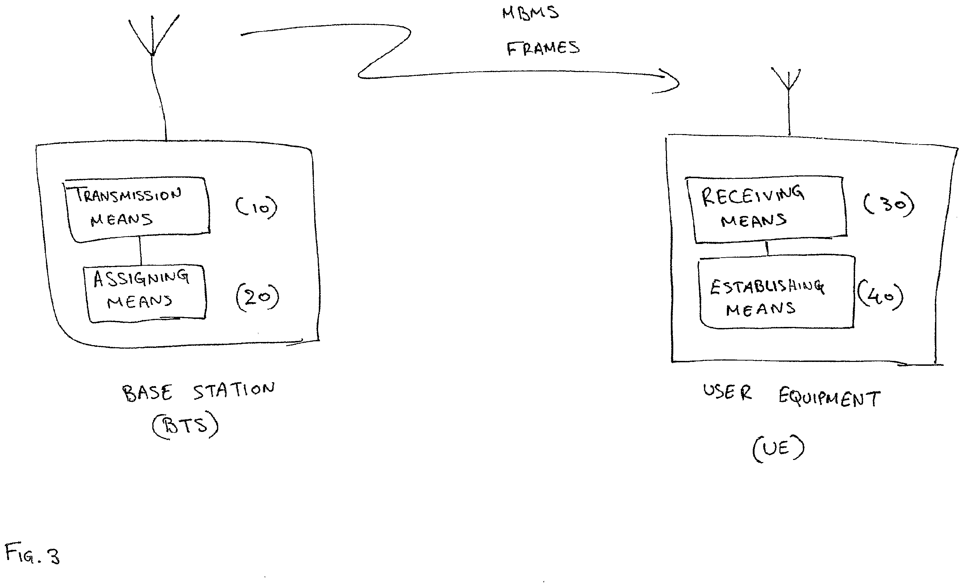

FIG 1 shows the basic structure of a GSM mobile radio system. The system consists of a central mobile switching center MSC connected to the public switched telephone network PSTN and other MSCs. Connected to a MSC is a plurality of base station controllers BSC, which inter alia coordinate the sharing of the radio resources provided by base stations BTS (Base Transceiver Station). Base stations BTS transmit in downlink DL and receive in uplink UL signals respectively to or from user equipments UE situated within the area covered by the base station BTS. In FIG 1 the base station BTS sends out a request for the activation of an MBMS multicast service on a paging channel PCH to the user equipments in its cell. The user equipments interested in this service or possessing the particular characteristic respond to the request by sending an access message on the contention based access channel RACH. In FIG 3, a base station (BTS) comprises transmission means (10) and assignation means (20), while a user equipment (UE) comprises receiving means (30) and establishing means (40) .

According to the invention, the so called MACCH fulfils both functions of a (P)AGCH and the downlink aspect of a PACCH (Packet Associated Control Channel, see TS 45.002). This might be realised in that on one hand the MACCH offers a number or all messages available on the PACCH and (P)AGCH, i.e. messages for the grant of channels and messages for controlling purposes. Additional messages may be defined for the specific purpose of the MACCH. On the other hand the MACCH is identified by means of the PACCH (i.e. timeslot, frequency and/or transport format indicator (TFI)). In case the MACCH is used as a point-to-point channel, the messages may include identifier means in order to address a particular user equipment, whereby the identification of the user equipment may be realised as known from the MRACH random reference or TLLI (Temporary Logical Link Identifier). The TLLI provides a signalling address for communications between the UE and a network node that keeps track of the location of individual UEs. In case the MACCH is used as point-to-multipoint channel, a global user equipment identifier, e.g. a default empty identifier, may be used to address the user equipments. In both cases the user equipment (UE) receiving means (30) are adapted to recognise that an identifier has been received, furthermore the receiving means (30) are adapted to recognise between received broadcast and/or control information.

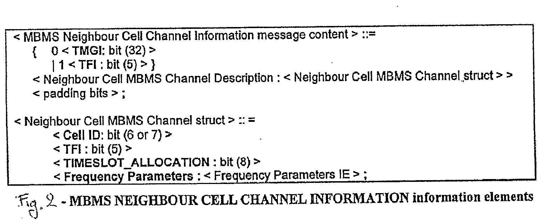

In case the MACCH is used as a point to multipoint channel, another feature is that the messages may include information about the frequencies allocated to the MBMS traffic channel and notification channel in the neighbouring cells. This will speed up the cell reselection process in the event of a UE changing cell, as the UE can start receiving MBMS data while still reading the system information in the new cell. Thus reducing the time of service interruption, which is caused by UEs moving from one cell to another cell. The message is transmitted on the MACCH and is named "MBMS Neighbour Cell Channel Information". A possible format of the message is shown in FIG.2.

The parameter "Cell ID" indicates which cell the Frequency Parameters Information Element IE refers to. The parameter is an index into one of the neighbour cell lists. The length of the field depends upon which list is used to identify the cell. For example, if it is the GSM neighbour cell list, then 6 bits are required as this is the length of the Frequency_N parameter in the packet measurement report message or of the removed_freq_index in the packet measurement order message, defined in TS 44.060. If the 3G neighbour cell list is used, then 7 bits are required.

When setting up an MBMS communication, a hopping channel is used between the UE and the base station. As is known in the art, three different methods to encode the frequency parameters defining a hopping radio frequency channel, transmitted to the UE in an assignment message are used: Indirect encoding, Direct encoding 1 and Direct encoding 2.
In indirect encoding the assigned set of radio frequency channels is defined by referencing information stored within the UE; such information may be received on the PBCCH or on the BCCH, or is received in a previous assignment message. In direct encoding, the assigned set of radio frequency channels is defined by using information contained within the assignment message itself. Direct encoding 1, references the cell allocation or reference frequency lists (RFLs) received on PBCCH for the decoding of this information. Direct encoding 2, is self-contained. The frequency list is the representation of a set of radio frequency channels defining a General Packet Radio Service (GPRS) mobile allocation. The encoding of the octet string is defined in TS 44.018 and the allowed formats of this information are defined in TS 44.060. Additionally, the UE can store up to 12 to 16 sets of frequency parameters for each neighbouring cell. The provided cell frequency parameters are those which have a high likelihood to be selected by an UE listening to an MBMS service. In fig. 2, it can be seen that the message is encoded in such a way that the MBMS channel description for only one neighbour cell is provided, however, as any person skilled in the art would know, it is possible to modify the message to include frequency information for more cells, or alternatively of transmitting a series of messages containing frequency information for individual cells.

The resource allocation for the MACCH is realised as in the PACCH case by stealing frames of the MBMS channel, therefore the usage of the MACCH should be minimised. As a consequence, a user equipment having established a point-to-point as well as a point-to-multipoint connection should rather use the PACCH than the MACCH.

Advantages of such a method according to the invention are: Establishment of a parallel point-to-point connection without interrupting the reception of point-to-multipoint MBMS services.

Any operations on the point-to-point bearer can be performed like on the point-to-point bearer with the PACCH.

These advantages are optimised in conjunction with the MRACH, however the functionality of the MRACH is not a pre-condition for the MACCH.

The invention resides in the combination of a broadcast common channel and a point-to-point associated control channel, and the fact that the user equipment informs the network about established point-to-multipoint bearers during the early access phase in order to allow an optimal usage of the scarce radio resources. In the nomenclature of the UTRAN (UMTS Terrestrial Radio Access Network) the MACCH may be defined as a transport channel on which (P)AGCH, point-to-multipoint PACCH and point-to-point PACCH are mapped.

## Claims

1. A base station (BTS) comprising: transmission means (10) adapted to transmit a multimedia broadcast/multicast service carrier having a frame structure for MBMS services, assigning means (20) adapted to assign specific information to at least one frame of said multimedia broadcast/multicast service carrier by stealing the at least one frame from said broadcast/multicast service carrier and assigning said specific information in its place, wherein the specific information is a downlink MBMS Associated Control Channel, which is a combination of a broadcast channel and an associated point-to-multipoint control channel, wherein a user equipment (UE) upon receiving said specific information is enabled to establish a connection without interrupting the reception of said broadcast/multicast service carrier.

2. A user equipment (UE), comprising: receiving means (30) adapted to receive a multimedia broadcast/multicast service carrier having a frame structure for MBMS services, the receiving means (30) being further adapted to receive a downlink MBMS Associated Control Channel in at least one frame stolen from said broadcast/multicast service carrier, the downlink MBMS Associated Control Channel being a combination of a broadcast channel and an associated point-to-multipoint control channel, wherein the user equipment (UE) upon receiving said specific information is enabled to establish a connection without interrupting the reception of said broadcast/multicast service carrier.

3. A radio communication system comprising a base station according to claim 1 and a user equipment (UE) according to claim 2.

4. A system according to claim 3, wherein said user equipment (UE) further comprises an establishing means (40) adapted to establish a point-to point or a point-to-multipoint connection.

5. A system according to claim 3 or claim 4, wherein in said user equipment (UE) said receiving means (30) is further adapted to recognise between broadcast and control information.

6. A system according to claim 3, wherein when said system is used to establish said point-to-point connection, said base station (BTS) assigning means (20) are further adapted to assign an identifier to address a particular user equipment and said user equipment (UE) reception means (30) are further adapted to recognise said identifier.

7. A system according to claim 3, wherein when said system is used to establish said point-to-multipoint connection, said base station (BTS) assigning means (20) are further adapted to assign a global user equipment identifier and/or neighbouring cell frequency parameters and said user equipment (UE) reception means (30) are further adapted to recognise said global user equipment identifier and/or said neighbouring cell frequency parameters.

8. A method for a base station, comprising: transmitting a multimedia broadcast/multicast service carrier having a frame structure for MBMS services, assigning specific information to at least one frame of said multimedia broadcast/ multicast service carrier by stealing the at least one frame from said broadcast/multicast service carrier and assigning said specific information in its place, wherein the specific information is a downlink MBMS Associated Control Channel, which is a combination of a broadcast channel and an associated point-to-multipoint control channel, wherein a user equipment (UE) upon receiving said specific information is enabled to establish a connection without interrupting the reception of said broadcast/multicast service carrier.

9. A method for a user equipment (UE), comprising: receiving a multimedia broadcast/multicast service carrier having a frame structure for MBMS services, receiving a downlink MBMS Associated Control Channel in at least one frame stolen from said broadcast/multicast service carrier, the downlink MBMS Associated Control Channel being a combination of a broadcast channel and an associated point-to-multipoint control channel, wherein the user equipment (UE) upon receiving said specific information is enabled to establish a connection without interrupting the reception of said broadcast/multicast service carrier.

## Patentansprüche

1. Basisstation (BTS), umfassend: Übertragungsmittel (10), die geeignet sind, einen Multimedia Broadcast/Multicast Dienstträger mit einer Rahmenstruktur für MBMS Dienste zu übertragen, Zuordnungsmittel (20), die geeignet sind, spezifische Informationen zu mindestens einem Rahmen des Multimedia Broadcast/Multicast Dienstträgers zuzuordnen, durch Stehlen des mindestens einen Rahmens aus dem Broadcast/Multicast Dienstträger und Zuordnen der spezifischen Rahmeninformationen an seiner Stelle, wobei die spezifischen Informationen ein Downlink MBMS-assoziierter Steuerkanal sind, der eine Kombination eines Broadcast-Kanals und eines assoziierten Punkt-zu-Multipunkt-Steuerkanals ist, wobei eine Benutzerausrüstung (UE), beim Empfangen der spezifischen Informationen, freigegeben wird, um eine Verbindung herzustellen, ohne den Empfang des Broadcast/ Multicast Dienstträgers zu unterbrechen.

2. Benutzerausrüstung (UE), umfassend: Empfangsmittel (30), die geeignet sind, einen Multimedia Broadcast/Multicast Dienstträger mit einer Rahmenstruktur für MBMS Dienste zu empfangen, wobei die Empfangsmittel (30) ferner geeignet sind, einen Downlink MBMS-assoziierten Steuerkanal in dem mindestens einen Rahmen zu empfangen, der aus dem Broadcast/Multicast Dienstträger gestohlen wird, wobei der Downlink MBMS-assoziierte Steuerkanal eine Kombination eines Broadcast-Kanals und eines assoziierten Punkt-zu-Multipunkt-Steuerkanals ist, wobei die Benutzerausrüstung (UE), beim Empfangen der spezifischen Informationen, freigegeben wird, um eine Verbindung herzustellen, ohne den Empfang des Broadcast/Multicast Dienstträgers zu unterbrechen.

3. Funkkommunikationssystem, umfassend eine Basisstation nach Anspruch 1 und eine Benutzerausrüstung (UE) nach Anspruch 2.

4. System nach Anspruch 3, wobei die Benutzerausrüstung (UE) ferner ein Herstellungsmittel (40) umfasst, das geeignet ist, eine Punkt-zu-Punkt- oder eine Punkt-zu-Multipunkt-Verbindung herzustellen.

5. System nach Anspruch 3 oder Anspruch 4, wobei in der Benutzerausrüstung (UE) das Empfangs-mittel (30) ferner geeignet ist, zwischen Broadcast- und Steuerinformationen zu unterscheiden.

6. System nach Anspruch 3, wobei, wenn das System verwendet wird, um die Punkt-zu-Punkt-Verbindung herzustellen, die Basisstation- (BTS) Zuordnungsmittel (20) ferner geeignet sind, einen Identifikator zuzuordnen, um eine bestimmte Benutzerausrüstung zu adressieren, und die Benutzerausrüstung- (UE) Empfangsmittel (30) ferner geeignet sind, den Identifikator zu erkennen.

7. System nach Anspruch 3, wobei, wenn das System verwendet wird, um die Punkt-zu-Multipunkt-Verbindung herzustellen, die Basisstation- (BTS) Zuordnungsmittel (20) ferner geeignet sind, einen globalen Benutzerausrüstungsidentifikator und/oder Nachbarzellen-Frequenzparameter zuzuordnen, und die Benutzerausrüstung- (UE) Empfangsmittel (30) ferner geeignet sind, den globalen Benutzerausrüstungsidentifikator und/oder die Nachbarzellen-Frequenzparameter zu erkennen.

8. Verfahren für eine Basisstation, umfassend: Übertragen eines Multimedia Broadcast/Multicast Dienstträgers mit einer Rahmenstruktur für MBMS Dienste, Zuordnen spezifischer Informationen zu mindestens einem Rahmen des Multimedia Broadcast/Multicast Dienstträgers, durch Stehlen des mindestens einen Rahmens aus dem Broadcast/Multicast Dienstträger und Zuordnen der spezifischen Rahmeninformationen an seiner Stelle, wobei die spezifischen Informationen ein Downlink MBMS-assoziierter Steuerkanal sind, der eine Kombination eines Broadcast-Kanals und eines assoziierten Punkt-zu-Multipunkt-Steuerkanals ist, wobei eine Benutzerausrüstung (UE), beim Empfangen der spezifischen Informationen, freigegeben wird, um eine Verbindung herzustellen, ohne den Empfang des Broadcast/Multicast Dienstträgers zu unterbrechen.

9. Verfahren für eine Benutzerausrüstung (UE), umfassend: Empfangen eines Multimedia Broadcast/Multicast Dienstträgers mit einer Rahmenstruktur für MBMS Dienste, Empfangen eines Downlink MBMS-assoziierten Steuerkanals in dem mindestens einen Rahmen, der aus dem Broadcast/Multicast Dienstträger gestohlen wird, wobei der Downlink MBMS-assoziierte Steuerkanal eine Kombination eines Broadcast-Kanals und eines assoziierten Punkt-zu-Multipunkt-Steuerkanals ist, wobei die Benutzerausrüstung (UE), beim Empfangen der spezifischen Informationen, freigegeben wird, um eine Verbindung herzustellen, ohne den Empfang des Broadcast/Multicast Dienstträgers zu unterbrechen.

## Revendications

1. Station de base (BTS) comprenant : un moyen de transmission (10) conçu pour transmettre une porteuse de service de diffusion/multidiffusion multimédia ayant une structure de trame pour des services MBMS, des moyens d'attribution (20) conçus pour attribuer des informations spécifiques à au moins une trame de ladite porteuse de service de diffusion/multidiffusion multimédia en détournant la ou les trames de ladite porteuse de service de diffusion/multidiffusion et en affectant lesdites informations spécifiques à leur place, dans laquelle les informations spécifiques constituent un canal de commande associé au service MBMS de liaison descendante, qui est une combinaison d'un canal de diffusion et d'un canal de commande de point à multipoint associé, dans laquelle un équipement utilisateur (UE), lors de la réception desdites informations spécifiques, est autorisé à établir une connexion sans interrompre la réception de ladite porteuse de service de diffusion/multidiffusion.

2. Équipement utilisateur (UE), comprenant : des moyens de réception (30) conçus pour recevoir une porteuse de service de diffusion/multidiffusion multimédia ayant une structure de trame pour des services MBMS, les moyens de réception (30) étant en outre conçus pour recevoir un canal de commande associé au service MBMS de liaison descendante dans au moins une trame détournée de ladite porteuse de service de diffusion/multidiffusion, le canal de commande associé au service MBMS de liaison descendante étant une combinaison d'un canal de diffusion et d'un canal de commande de point à multipoint associé, dans lequel l'équipement utilisateur (UE), lors de la réception desdites informations spécifiques, est autorisé à établir une connexion sans interrompre la réception de ladite porteuse de service de diffusion/multidiffusion.

3. Système de radiocommunication comprenant une station de base selon la revendication 1 et un équipement utilisateur (UE) selon la revendication 2.

4. Système selon la revendication 3, dans lequel ledit équipement utilisateur (UE) comprend en outre un moyen d'établissement (40) conçu pour établir une connexion de point à point ou de point à multipoint.

5. Système selon la revendication 3 ou la revendication 4, dans lequel, dans ledit équipement utilisateur (UE), ledit moyen de réception (30) est en outre conçu pour faire une distinction entre des informations de diffusion et de commande.

6. Système selon la revendication 3, dans lequel, lorsque ledit système est utilisé pour établir ladite connexion de point à point, lesdits moyens d'attribution de station de base (BTS) (20) sont en outre conçus pour attribuer un identifiant pour traiter un équipement utilisateur particulier et lesdits moyens de réception d'équipement utilisateur (UE) (30) sont en outre conçus pour reconnaître ledit identifiant.

7. Système selon la revendication 3, dans lequel, lorsque ledit système est utilisé pour établir ladite connexion de point à multipoint, lesdits moyens d'attribution de station de base (BTS) (20) sont en outre conçus pour attribuer un identifiant d'équipement utilisateur global et/ou des paramètres de fréquence de cellule voisine et lesdits moyens de réception d'équipement utilisateur (UE) (30) sont en outre conçus pour reconnaître ledit identifiant d'équipement utilisateur global et/ou lesdits paramètres de fréquence de cellule voisine.

8. Procédé pour une station de base, comprenant : la transmission d'une porteuse de service de diffusion/multidiffusion multimédia ayant une structure de trame pour des services MBMS, l'attribution d'informations spécifiques à au moins une trame de ladite porteuse de service de diffusion/multidiffusion multimédia en détournant la ou les trames de ladite porteuse de service de diffusion/multidiffusion et en affectant lesdites informations spécifiques à leur place, dans lequel les informations spécifiques constituent un canal de commande associé au service MBMS de liaison descendante, qui est une combinaison d'un canal de diffusion et d'un canal de commande de point à multipoint associé, dans lequel un équipement utilisateur (UE), lors de la réception desdites informations spécifiques, est autorisé à établir une connexion sans interrompre la réception de ladite porteuse de service de diffusion/multidiffusion.

9. Procédé pour un équipement utilisateur (UE), comprenant :
la réception d'une porteuse de service de diffusion/multidiffusion multimédia ayant une structure de trame pour des services MBMS, la réception d'un canal de commande associé au service MBMS de liaison descendante dans au moins une trame détournée de ladite porteuse de service de diffusion/multidiffusion, le canal de commande associé au service MBMS de liaison descendante étant une combinaison d'un canal de diffusion et d'un canal de commande de point à multipoint associé, dans lequel l'équipement utilisateur (UE), lors de la réception desdites informations spécifiques, est autorisé à établir une connexion sans interrompre la réception de ladite porteuse de service de diffusion/multidiffusion.
